# EUROPÄISCHE PATENTSCHRIFT

(11) **EP 1 420 190 B1**
(45) Veröffentlichungstag und Bekanntmachung des Hinweises auf die Patenterteilung: **26.04.2006**
(21) Anmeldenummer: 03024605.2
(22) Anmeldetag: 25.10.2003
(51) Int. Cl.: F16H 7/08

(54) **Schaltbarer Zahnriemenantrieb**
Switchable belt drive
Entraînement à courroie commutable

(30) Priorität: 12.11.2002 DE 10252434
(43) Veröffentlichungstag der Anmeldung: 19.05.2004
(73) Patentinhaber: Kirstein, Gerhard, 86152 Augsburg (DE)
(72) Erfinder: Kirstein, Gerhard, 86152 Augsburg (DE)
(74) Vertreter: Vetter, Ewald Otto

(56) Entgegenhaltungen:
- DE-A1- 2 518 576
- DE-A1- 3 123 246
- FR-A- 1 112 819
- GB-A- 989 065

## Beschreibung

Die Erfindung betrifft einen schaltbaren Zahnriemenantrieb gemäß dem Oberbegriff von Anspruch 1.

Demgemäß betrifft die Erfindung einen schaltbaren Zahnriemenantrieb, enthaltend mindestens einen Antriebssatz, welcher mindestens zwei achsparallel und mit Abstand voneinander angeordnete Zahnräder und einen sich um diese Zahnräder herum erstreckenden Zahnriemen aufweist, dessen Zähne in die Zähne der Zahnräder eingreifen können.

Der schaltbare Zahnriemenantrieb nach der Erfindung eignet sich zum Antrieb von beliebigen Maschinen, insbesondere jedoch auch als Fahrantrieb für Kraftfahrzeuge wie Personenautos, Lastkraftwagen und Motorräder, jedoch auch für Motorboote und Motorschiffe.

Aus der gattungsgemässen DE 31 23 246 A1 ist ein Riemenantrieb bekannt, bei welchem ein Keilriemen durch seitlichen Kontakt mit Keilscheiben die Antriebskraft überträgt. Mindestens eine der beiden Keilscheiben ist entgegen einer Federkraft durch die Zugkraft des Keilriemens axial verschiebbar und zwischen den beiden Keilscheiben befindet sich ein Zahnrad. Wenn die Antriebskraft des Keilriemeris einen bestimmten Wert überschreitet, drückt der Keilriemen die Keilscheiben auseinander, sodass eine Verzahnung auf der Innenseite des Keilriemens in die Verzahnung des Zahnrades eingreifen kann zur zusätzlichen Antriebskraftübertragung. Weitere Riemenantriebe, welche keine Zahnräder enthalten, sind aus der FR-A 1 112 819, GB 989,065 A und der DE 25 18 576 A1 bekannt.

Durch die Erfindung soll die Aufgabe gelöst werden, einen schaltbaren Zahnriemenantrieb zu schaffen, welcher geräuscharm läuft, leicht und schnell zu schalten ist, betriebssicher ist und eine lange Lebensdauer hat.

Diese Aufgabe wird gemäß der Erfindung durch die kennzeichnenden Merkmale von Anspruch 1 gelöst.

Weitere Merkmale sind in den Unteransprüchen enthalten.

Die Erfindung wird im folgenden mit Bezug auf die Zeichnungen anhand von bevorzugten Ausführungsformen als Beispiele beschrieben. In den Zeichnungen zeigen
- Fig. 1: schematisch und unmaßstäblich eine Seitenansicht eines schaltbaren Zahnriemenantriebes nach der Erfindung, im Querschnitt I von Fig. 2 gesehen, wobei ein Zahnriemen außer Eingriff von einem der Zahnräder gezeigt ist, jedoch gemäß gestrichelten Linien in Eingriff bringbar ist, während der Zahnriemen mit einem anderen Zahnrad ständig in Eingriff ist,
- Fig.2: einen Axialschnitt eines Teiles von Fig. 1, wobei eine Ein- und Ausrückvorrichtung in der unteren Hälfte von Fig. 2 in einer Ausrückstellung und damit der Zahnriemen relativ zu dem Zahnrad in der Außereingriffstellung gezeigt ist, während die obere Hälfte von Fig. 2 die Ein- und Ausrückvorrichtung in der Einrückstellung und damit den Zahnriemen in Eingriffstellung mit dem Zahnrad zeigt,
- Fig. 3: den schaltbaren Zahnriemenantrieb von Fig. 1, wobei der Zahnriemen in Eingriffstellung mit beiden Zahnrädern ist entsprechend der oberen Hälfte von Fig. 2,
- Fig.4: schematisch und unmaßstäblich eine Seitenansicht einer weiteren Ausführungsform eines schaltbaren Zahnriemenantriebes nach der Erfindung, wobei der Zahnriemen mit einem unteren Zahnrad außer Eingriff ist entsprechend durchgezogen gezeichneten Linien von Fig. 4 und entsprechend Fig. 5, jedoch auch in Eingriff bringbar ist entsprechend gestrichelt gezeichneten Linien von Fig. 4 und entsprechend Fig. 6, während der Zahnriemen mit dem anderen Zahnrad ständig in Eingriff ist,
- Fig. 5: das eine Zahnrad von Fig. 4 zusammen mit einem Ausrücker einer Ein- und Ausrückvorrichtung in einer Ausrückstellung, wobei der Zahnriemen in seiner Außereingriffstellung von dem Zahnrad radial distanziert ist,
- Fig. 6: das eine Zahnrad von Fig. 4 zusammen mit dem Ausrücker der Ein- und Ausrückvorrichtung in einer Einrückstellung, wobei der Zahnriemen in Eingriffstellung mit dem Zahnrad ist,
- Fig. 7: einen schaltbaren Zahnriemenantrieb nach der Erfindung mit mehreren Antriebssätzen nach den Fig. 1 bis 3 (oder Fig. 4 bis 6).

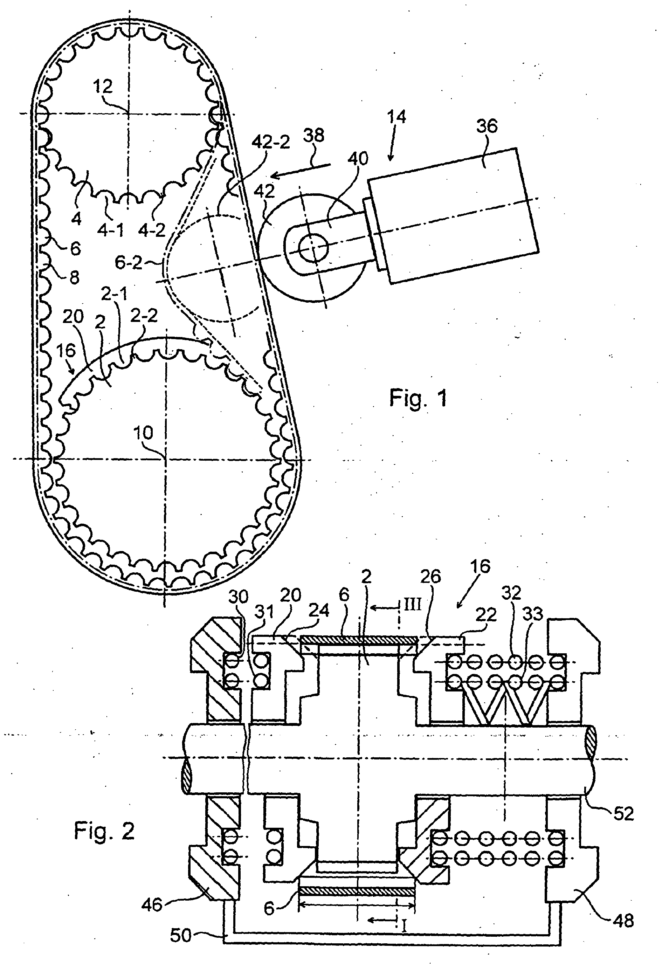

Der in den Fig. 1 bis 3 gezeigte schaltbare Zahnriemenantrieb nach der Erfindung enthält mindestens einen Antriebssatz, welcher mindestens zwei Zahnräder 2 und 4 aufweist, die achsparallel und mit Abstand voneinander angeordnet sind, und einen sich um diese Zahnräder 2, 4 erstreckenden Zahnriemen 6, dessen Zähne in die Lücken 2-1 bzw. 4-1 zwischen den Zähnen 2-2 bzw. 4-2 der Zahnräder 2 und 4 eingreifen können. Die Zahnräder 2 und 4 sind um Drehachsen 10 bzw. 12 drehbar angeordnet.

Es ist eine Ein- und Ausrückvorrichtung 14, 16 vorgesehen, um den Zahnriemen 6 mit mindestens einem der beiden Zahnräder, im vorliegenden Falle mit dem Zahnrad 2, alternativ in Eingriff und außer Eingriff zu bringen.

Fig. 1 zeigt den Zahnriemen 6 in Außereingriffstellung mit dem einen Zahnrad 2 und in Eingriffstellung mit dem anderen Zahnrad.

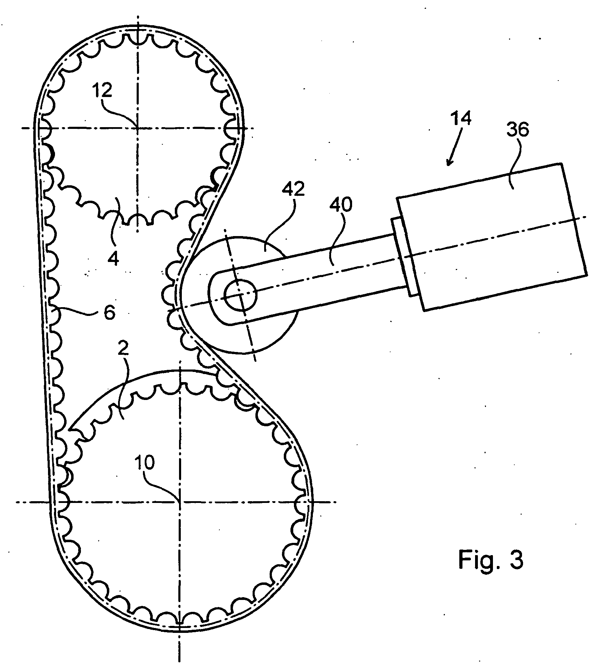

Fig. 3 zeigt den Zahnriemen 6 in seiner Eingriffstellung mit beiden Zahnrädern 2 und 4.

Die Ein- und Ausrückvorrichtung 14, 16 enthält bei dem Zahnrad 2, bei welchem der Zahnriemen 6 in Eingriff und außer Eingriff gebracht werden soll, eine geteilte Riemenscheibe mit zwei Scheiben 20, 22, welche beidseitig von dem Zahnrad 2 angeordnet sind, relativ zu diesem Zahnrad 2 axial verschiebbar und um dessen Drehachse 10 herum frei drehbar angeordnet sind. Die beiden Scheiben 20 und 22 haben auf ihren einander zugewandten Seiten je eine kreisförmige Riemenlauffläche 24 bzw. 26, welche in Richtung gegeneinander und zur Drehachse 10 schräg abfallend sind, so dass sie zwischen sich eine Keilnut zur Aufnahme des Zahnriemens 6 bilden. Die Riemenlaufflächen 24 und 26 rollen auf seitlichen Rändern des Zahnriemens 6.

Die Ein- und Ausrückvorrichtung 14, 16 enthält einen Ausrücker 16, durch welchen auf die beiden Scheiben 20 und 22 eine sie axial in Richtung gegeneinander drängende Axialkraft ausübbar ist, durch welche die beiden Scheiben 20 und 22 so weit axial gegeneinander bewegbar sind, dass sie den Zahnriemen 6 von dem zwischen ihnen angeordneten Zahnrad 2 radial abheben und damit von der in Fig. 3 gezeigten Eingriffstellung in die in Fig. 1 gezeigte Außereingriffstellung bringen. Hierbei läuft der Zahnriemen 6 auf den Riemenlaufflächen 24, 26 der Scheiben 20, 22 von einem kleineren auf einen größeren Scheibendurchmesser.

Die Ein- und Ausrückvorrichtung 14, 16 hat außerdem einen Einrücker 14, durch welchen auf den Zahnriemen 6, auf seine Außenseite, quer zu den Drehachsen 10, 12 der Zahnräder 2, 4, eine Einrückkraft ausübbar ist, welche den Zahnriemen 6 so stark spannt, dass er die beiden Scheiben 20 und 22 so weit axial voneinander weg drücken kann, dass er relativ zum Zahnrad 2 von der Außereingriffstellung von Fig. 1 in die Eingriffstellung von Fig. 3 sich bewegt. Hierbei läuft der Zahnriemen 6 auf den Riemenlaufflächen 24, 26 der Scheiben 20, 22 von einem größeren auf einen kleineren Scheibendurchmesser.

Bei der Ausführungsform nach den Fig. 1 bis 3 hat der Ausrücker 16 Ausrück-Federmittel 30, 31, 32 und 33 zur Erzeugung der Ausrückkraft, welche die beiden Scheiben 20 und 22 federelastisch in Richtung gegeneinander vorspannen. Diese Vorspannung bildet die Ausrückkraft, durch welche die beiden Scheiben 20 und 22 axial enger zusammen drückbar sind, um den Zahnriemen 6 von dem Zahnrad 2 radial abzuheben und damit von der Eingriffstellung von Fig. 3 in die Außereingriffstellung von Fig. 1 zu bringen.

Der Einrücker 14 hat einen Stellantrieb zur Erzeugung der Einrückkraft, welche in Fig. 1 durch einen Pfeil 38 dargestellt ist, und welche so stark ist, dass sie die federelastische Ausrückkraft des Ausrückers 16 überwinden kann, wobei die beiden Scheiben 20, 22 entgegen der Kraft der Ausrück-Federmittel 30, 31, 32, 33 axial voneinander weg drückbar sind durch die Zugspannung im Zahnriemen 6, so dass der Zahnriemen 6 mit dem Zahnrad 2 radial in Eingriff bringbar ist durch radiales Bewegen des Zahnriemens von der Außereingriffstellung von Fig. 1 in die Eingriffstellung von Fig. 3.

Die Ausrück-Federmittel 30, 31, 32 und 33 üben die Ausrückkraft konstant aus, wohingegen der Stellmotor 36 die Einrückkraft nur bei Bedarf ausübt.

Der Stellmotor 36 kann ein Linear-Stellantrieb oder ein Spindel-Antrieb sein. Vorzugsweise hat er einen axial ausfahrbaren Stößel 40. Dieser Stößel 40 drückt vorzugsweise nicht direkt auf den Zahnriemen 6, da sonst zwischen ihnen ein Reibkontakt bestehen würde, sondern über eine am Stößel 40 drehbar gelagerte Rolle 42, welche mit der von der Verzahnung 8 abgewandten Riemenaußenseite des Zahnriemens 6 in Rollkontakt ist. Fig. 1 zeigt die Rolle 42 in ausgezogenen Linien in der Ausrückstellung und in gestrichelten Linien in einer Einrückstellung 42-2, wobei auch ein Abschnitt 6-2 des Zahnriemens 6 gestrichelt in der Einrückstellung gezeichnet ist. Fig. 3 zeigt den Einrücker 14 in ausgezogenen Linien in seiner Einrückstellung und damit den Zahnriemen 6 in Eingriffstellung mit beiden Zahnrädern 2 und 4.

Der Einrücker 14, insbesondere seine Rolle 42, kann in der Ausrückstellung an dem Zahnriemen 6 anliegen entsprechend Fig. 1 oder von dem Zahnriemen 6 distanziert sein zur Vermeidung von Energieverlusten. Wenn der Einrücker 14, insbesondere seine Rolle 42, in der Einrückstellung von Fig. 1 an den Zahnriemen 6 anliegt, kann es zweckmäßig sein, eine Vorspannfeder vorzusehen, welche die Rolle 42 federelastisch an den Zahnriemen 6 andrückt, um ein Hüpfen der Rolle 42 auf dem Zahnriemen 6 zu vermeiden. Eine solche Vorspannfeder hat jedoch nur eine so kleine Federkraft, dass sie die Ausrück-Federkraft der Ausrückfedermittel 30, 31, 32 und 33 des Ausrückers 16 nicht überwinden kann.

Fig. 2 zeigt den Ausrücker 16 in der oberen Zeichnungshälfte in der eingerückten Stellung, bei welcher der Zahnriemen 6 mit dem Zahnrad 2 entsprechend Fig. 3 in Eingriff ist, und in der unteren Hälfte von Fig. 2 in der Ausrückstellung, bei welcher der Zahnriemen 6 mit dem Zahnrad 2 nicht in Eingriff ist, sondern sich entsprechend Fig. 1 in seiner Außereingriffstellung befindet.

Die Ausrück-Federmittel 30, 31, 32 und 33 können aus zwei Druckfedern 30 und 32, oder entsprechend Fig. 2 auch aus zwei Paaren 30, 31 und 32, 33 von Druckfedern bestehen, welche zwischen die voneinander abgewandten äußeren Stirnseiten der Scheiben 20 und 22 und diesen axial gegenüber liegende innere Stirnseiten von Gegendruckelementen 46 und 48 axial mit Vorspannung eingespannt sind. Die Gegendruckelemente 46 und 48 haben einen definierten, unveränderbaren axialen Abstand sowohl voneinander als auch von dem Zahnrad 2, welches sich zwischen den Scheiben 20 und 22 befindet, was in Fig. 2 schematisch durch einen Verbindungsbügel 50, dargestellt ist, welcher die beiden Gegendruckelemente 46 und 48 miteinander verbindet. Anstatt eines solchen Verbindungsbügels oder Verbindungskörpers könnten die Gegendruckelemente 46 und 48 auch auf einer Welle 52 axial fixiert sein, mit welcher das Zahnrad 2 drehfest verbunden ist, beispielsweise gemäß Fig. 2 einstückig ausgebildet ist. Zur axialen Fixierung der Gegendruckelemente 46 und 48 kann an der Welle 52 beispielsweise ein Federring in einer Wellennut befestigt werden.

Bei den Ausführungsformen der Fig. 1, 2 und 3 ist der Ausrücker der passive Teil, welcher ständig die Ausrückkraft erzeugt, und der Einrücker der aktive Teil, welcher nur dann aktiviert wird, wenn der Zahnriemen 6 von der Außereingriffstellung von Fig. 1 in die Eingriffstellung von Fig. 3 bewegt werden soll, wobei der Einrücker 14 die Ausrückkraft des Ausrückers 16 überwindet. Nach dem Abschalten des Einrückers 14 drängen die Ausrück-Federmittel 30, 31, 32 und 33 des Ausrückers 16 den Zahnriemen 6 wieder von der Eingriffstellung von Fig. 3 in die Außereingriffstellung von Fig. 1.

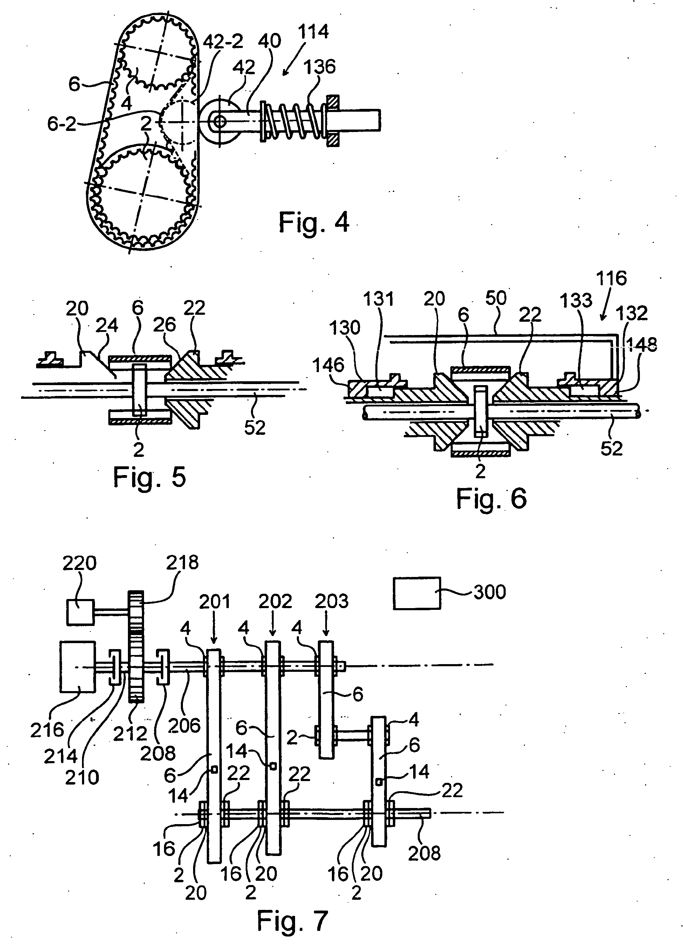

Die Ausführungsform nach den Fig. 4, 5 und 6 hat in gleicher Weise wie die Fig. 1, 2 und 3 zwei Zahnräder 2 und 4 und einen Zahnriemen 6, welcher mit dem einen Zahnrad 2 alternativ in Eingriff und außer Eingriff bringbar ist und mit dem anderen Zahnrad 4 ständig in Eingriff ist. Ein Einrücker 114 hat wiederum einen Stößel 40 mit einer Rolle 44. Ferner ist wieder eine Riemenscheibe mit den beiden Scheiben 20 und 22 vorgesehen, welche beidseitig des einen Zahnrades 2 angeordnet sind und relativ zu diesem Zahnrad 2 drehbar und axial verstellbar sind, z. B. verschiebbar oder schraubbar. Ferner ist eine Ausrückvorrichtung 116 vorgesehen, durch welche die beiden Scheiben 20 und 22 von einer Ausrückstellung von Fig. 5 in eine Einrückstellung von Fig. 6 so weit axial gegeneinander bewegbar sind, beispielsweise verschiebbar sind, dass der Zahnriemen 6 von seiner in Fig. 6 gezeigten Eingriffstellung mit dem Zahnrad 2 in die in den Fig. 4 und 5 in ausgezogenen Linien gezeigte Außereingriffstellung vom Zahnrad 2 radial weg bewegt werden kann. Fig. 4 zeigt in gestrichelten Linien auch die Eingriffstellung des Zahnriemens 6.

Bei der Ausführungsform der Fig. 4, 5 und 6 ist der Einrücker 114 der passive Teil, welcher mittels Einrück-Federmittel 136, z. B. einer oder mehreren Druckfedern, eine Einrück-Federkraft ständig erzeugt, durch welche der Stößel 40 mit der Rolle 44 von seiner in Fig. 4 in ausgezogenen Linien gezeigten Ausrückstellung in die in Fig. 4 in gestrichelten Linien gezeigte Einrückstellung bewegbar ist, solange der Ausrücker 116 nicht aktiviert (eingeschaltet) ist. Wenn der Ausrücker 116 aktiviert wird, erzeugt er eine Ausrückkraft, welche die Einrückkraft der Einrück-Federmittel 136 des Einrückers 114 überwindet und dadurch die Scheiben 20 und 22 relativ zueinander und relativ zu dem zwischen ihnen angeordneten Zahnrad 2 von der Eingriffstellung von Fig. 6 in die Außereingriffstellung von Fig. 5 enger zusammen bewegt, so dass die Scheiben 20 und 22 den Zahnriemen 6 von dem Zahnrad 2 radial abheben.

Hierfür weist die Ausrücker 116 einen Stellantrieb 130/132 auf. Der Stellantrieb 120/132 kann auf verschiedene Arten ausgebildet sein. Er kann die Scheiben 20 und 22 axial verschiebende Gewindespindeln in einer Gewindemutter aufweisen, von welchen der eine Teil drehbar und der andere Teil nicht drehbar ist. Die Fig. 5 und 6 zeigen einen Stellantrieb 130/132 mit auf beide Scheiben 20, 22 wirkenden Linear-Stellmotoren 130 bzw. 132, die jeweils gemeinsam betätigbar sind, beispielsweise elektrisch, pneumatisch oder hydraulisch. Fig. 5 und 6 zeigen eine pneumatische Ausführungsform, bei welcher zwischen den beiden Scheiben 20 und 22 und zwei Gegendruckelementen 146 und 148 je eine axial wirkende Druckkammer 131 bzw. 133 für Druckluft gebildet ist. Die beiden Gegendruckelemente 146 und 148 sind relativ zueinander und relativ zu dem Zahnrad 2, welches zwischen den Scheiben 20 und 22 angeordnet ist, axial ortsfest angeordnet. Bei Beaufschlagung der Druckkammern 131 und 133 mit Druckluft werden die Scheiben 20 und 22 axial näher zusammen geschoben von der Eingriffstellung des Zahnriemens 6 mit dem Zahnrad 2 von Fig. 6 in die Außereingriffstellung des Zahnriemens 6 von dem Zahnrad 2 von Fig. 5, entgegen der Einrückkraft des Einrückers 114.

Nach dem Zurücknehmen oder Entlüften des Druckes in den Druckkammern 131 und 133 werden die beiden Scheiben 20 und 22 von der Einrückkraft der Einrück-Federmittel 136 des Einrückers 114 axial auseinander bewegt, durch die von den Einrück-Federmitteln 136 im Zahnriemen 6 erzeugte Zugspannung. Hierbei drängt der Zahnriemen 6 die Scheiben 20 und 22 axial auseinander, bis der Zahnriemen 6 wieder mit dem Zahnrad 2 in Eingriff ist.

In den Fig. 4, 5 und 6 sind den Fig. 1, 2 und 3 entsprechende Teile mit gleichen Bezugszahlen versehen. Bei beiden Ausführungsformen läuft der Zahnriemen 6 auf den kegelförmigen oder andersartig schräg ausgebildeten Riemenlaufflächen 24 und 26 rauf und runter zwischen einem niedrigeren Laufflächendurchmesser bei der Zahnriemeneingriffstellung in der oberen Hälfte von Fig. 2 und in Fig. 6, und dem relativ dazu größeren Laufflächendurchmesser, bei welchem der Zahnriemen 6 in seiner Außereingriffstellung ist, welche in Fig. 2 in der unteren Hälfte und in Fig. 5 gezeigt ist. Der axiale Abstand der Gegendruckelemente 46 und 48 voneinander ist zwar auf einen festen Wert eingestellt, jedoch kann dieser Abstandswert variabel einstellbar sein auf beliebige feste Werte.

Ein schaltbarer Zahnriemenantrieb nach der Erfindung kann je aus einem, aus zwei oder mehreren Antriebssätzen bestehen, die je gemäß dem Antriebssatz der Fig: 1 bis 3 oder dem Antriebssatz gemäß den Fig. 4 bis 6 ausgebildet sind.

Fig. 7 zeigt einen schaltbaren Zahnriemenantrieb nach der Erfindung mit beispielsweise drei Antriebsverbindungen 201, 202 und 203 zwischen einer Eingangswelle 206 und einer Ausgangswelle 208. Jede dieser Antriebsverbindungen 201, 202 und 203 enthält mindestens einen Antriebssatz nach den Fig. 1 bis 3 oder 4 bis 6. Bei der Ausführungsform von Fig. 7 enthalten die beiden Antriebsverbindungen 201 und 202 je einen Antriebssatz gemäß den Fig. 1 bis 3 (oder gemäß den Fig. 4 bis 6). Die dritte Antriebsverbindung 203 enthält zwei Antriebssätze, von welchen beide oder nur einer gemäß den Fig. 1 bis 3 (oder der Fig. 4 bis 6) ausgebildet sein können bzw. sein kann, während der andere Antriebssatz nur einen Zahnriemen 6 auf zwei Zahnrädern 2 und 4 hat, jedoch keine Ein- und Ausrückvorrichtung.

In Fig. 7 ist als Bespiel nur das Zahnrad 2, welches mit der Ausgangswelle 208 drehfest verbunden ist, mit Scheiben 20, 22 und einer Ein- und Ausrückvorrichtung 14/16 versehen.

In Fig. 7 sind die Zahnräder 2, welche mit Scheiben 20, 22 und einem Ausrücker 16 versehen sind, mit der Ausgangswelle 208 drehfest verbunden (oder bei anderer Ausführungsform mit der Eingangswelle 206 drehfest verbunden). Die Zahnräder 4 sind mit der Eingangswelle 206 (oder bei der anderen Ausführungsform mit der Ausgangswelle 208) drehfest verbunden. In der dritten Antriebsverbindung 203 sind außerdem bei der Verbindung zwischen den beiden Antriebssätzen ein Zahnrad 2 mit dem Zahnrad 4 drehfest miteinander axial verbunden.

Die Eingangswelle 206 ist über eine schaltbare Kupplung 208 mit einer Zwischenwelle 210, mit welcher ein Zahnrad 212 drehfest verbunden ist, kuppelbar. Die Zwischenwelle 210 ist über eine weitere schaltbare Kupplung 214 mit einem Verbrennungsmotor 216 kuppelbar. Mit dem Zahnrad 212 der Zwischenwelle 210 ist ein Zahnrad 218 in Eingriff, welches mit einer elektrischen Maschine 220 antriebsmäßig verbunden ist. Dadurch kann die elektrische Maschine 220 als Starter-Motor zum Starten des Verbrennungsmotors 216 dienen, wenn die eine Kupplung 208 geöffnet und die andere Kupplung 214 geschlossen ist. Ferner kann die elektrische Maschine 220 als Elektromotor betrieben werden, um bei geschlossener einer Kupplung 208 die Antriebswelle 206 und von dieser über eine der Antriebsverbindungen 201, 202 oder 203 die Ausgangswelle 208 anzutreiben, entweder allein oder zusammen mit dem Verbrennungsmotor 206. Vorzugsweise ist die elektrische Maschine 220 als Elektromotor alternativ in der einen oder anderen Drehrichtung antreibbar, so dass sie nicht nur für den Vorwärtsantrieb eines Fahrzeuges Antriebsenergie liefern kann, sondern auch als Antriebsmotor für Rückwärtsfahrt des Kraftfahrzeuges dienen kann. Ferner ist es vorteilhaft, wenn die elektrische Maschine 220 auch als Generator betreibbar ist zur Stromerzeugung, wobei sie entweder vom Verbrennungsmotor 216 oder von der Ausgangswelle 208 über eine der Antriebsverbindungen 201, 202 oder 203 antreibbar ist.

Schaltbare Zahnriemenantriebe nach der Erfindung eignen sich für den Antrieb von beliebigen Maschinen, insbesondere aber für den Antrieb von Kraftfahrzeugen wie insbesondere Autos, Motorräder und Lastkraftwagen, jedoch auch Motorboote und Motorschiffe. Der schaltbare Zahnriemenantrieb mit den Antriebsverbindungen 201, 201 und 203 und gegebenenfalls mit weiteren oder anderen Antriebsverbindungen kann ein manuell schaltbares oder ein automatisch schaltbares Gangwechselgetriebe sein oder zusammen mit einem Drehmomentwandler ein Automatikgetriebe bilden. Die einzelnen Gangstufen sind dadurch gebildet, dass in den verschiedenen Antriebsverbindungen 201, 202, 203 verschiedene Übersetzungen gebildet sind durch unterschiedliche Durchmesser der Zahnräder 2 und 4 und/oder durch eine oder mehrere Zwischenstufen entsprechend der dritten Antriebsverbindung 203 von Fig. 7.

Zum Schalten von Gängen wird jeweils mindestens einer der Zahnriemen 6 außer Eingriff von einem seiner Zahnräder, z. B. Zahnrad 2, gebracht und dann ein anderer Zahnriemen 6 in Eingriff mit allen seinen Zahnrädern 2, 4 gebracht. Für einen solchen Gangwechsel wird eine der Kupplungen 208 oder 214 geöffnet und nach dem Gangwechsel wieder geschlossen. Hierbei besteht auch die Möglichkeit, die betreffende Kupplung 208 oder 214 während einer vorbestimmten Phase des Gangwechsels in Abhängigkeit von vorbestimmten Kriterien im Rutschbetrieb (mit Gleitreibung) zu betreiben. Dadurch kann z. B. ohne Zugkraftunterbrechung der Antriebsstränge geschaltet werden. Die Kupplungen 208 und 214 sind vorzugsweise Lamellenkupplungen. Die Steuerung der Gangschaltvorgänge, einschließlich der Steuerung der Kupplung, erfolgt durch eine Steuereinrichtung 300.

## Patentansprüche

1. Schaltbarer Zahnriemenantrieb, enthaltend mindestens einen Antriebssatz, welcher mindestens zwei achsparallel und mit Abstand voneinander angeordnete Zahnräder (2,4) und einen sich um diese Zahnräder (2,4) herum erstreckenden Zahnriemen (6) aufweist, dessen Zähne in die Zähne (2-2,4-2) der Zahnräder (2,4) eingreifen können, wobei
eine Ein- und Ausrückvorrichtung (14,16;114,116) vorgesehen ist, um den Zahnriemen (6) mit mindestens einem der beiden Zahnräder (2,4) in Eingriff und außer Eingriff zu bringen durch radiales Abheben des Zahnriemens (6) von mindestens einem der beiden Zahnräder (2,4) von einer Eingriffstellung in eine Außereingriffstellung, und durch radiales Aufsetzen des Zahnriemens (6) auf dieses betreffende Zahnrad (2,4) von der Außereingriffstellung in die Eingriffstellung; **dadurch gekennzeichnet, dass** die Ein- und Ausrückvorrichtung (14, 16; 114, 116) eine geteilte Riemenscheibe mit zwei Scheiben (20,22) aufweist, welche beidseitig von dem betreffenden Zahnrad (2) angeordnet sind und relativ zu diesem Zahnrad (2) frei drehbar sind, wobei die Drehachsen (10,12) der Scheiben (20,22) mit der Drehachse des betreffenden Zahnrades (2) fluchten, dass die beiden Scheiben je eine kreisförmige Riemenlauffläche (24,26) haben, welche in Richtung gegeneinander und zur Drehachse (10) der Scheiben (20,22) schräg abfallend sind, so dass sie zwischen sich eine Keilnut zur Aufnahme des Zahnriemens (6) bilden, dass die beiden Scheiben (20,22) relativ zueinander und relativ zum Zahnrad (2) axial verstellbar angeordnet sind, dass die Ein- und Ausrückvorrichtung (14,16;114,116) einen Ausrücker (16; 116) aufweist, durch welchen auf die beiden Scheiben (20,22) eine sie axial in Richtung gegeneinander drängende Ausrückkraft ausübbar ist, durch welche die beiden Scheiben (20,22) so weit axial gegeneinander schiebbar sind, wobei der Zahnriemen auf den Riemenlaufflächen (24,26) der Scheiben (20,22) hoch läuft, dass sie den Zahnriemen (6) von dem zwischen ihnen angeordneten Zahnrad (2) radial abheben und damit von der Eingriffstellung in die Außereingriffstellung bringen, dass die Ein- und Ausrückvorrichtung (14,16;114,116) einen Einrücker (14;114) aufweist, durch welchen auf den Zahnriemen (6) auf seine Außenseite, quer zu den Drehachsen (10,12) der Zahnräder (2,4) eine Einrückkraft ausübbar ist, welche den Zahnriemen (6) so stark spannt, dass er die beiden Scheiben (20,22) so weit axial voneinander weg drücken kann, wobei der Zahnriemen auf den Riemenlaufflächen (24,26) der Scheiben (20,22) hinunter läuft, dass der Zahnriemen (6) radial auf das Zahnrad (2) aufsitzt und damit von der Außereingriffstellung in die Eingriffstellung mit dem Zahnrad (2) gelangt.

2. Schaltbarer Zahnriemenantrieb nach Anspruche 1,
**dadurch gekennzeichnet,**
**dass** der Ausrücker (16) Ausrück-Federmittel (30, 31, 32, 33) zur Erzeugung der Ausrückkraft aufweist, weiche die beiden Scheiben (20,22) federelastisch axial in Richtung gegeneinander vorspannen, dass der Einrücker (14) einen Stellantrieb (36) zur Erzeugung einer Einrückkraft aufweist, welche die federelastische Ausrückkraft überwinden kann.

3. Schaltbarer Zahnriemenantrieb nach Anspruch 1, **dadurch gekennzeichnet,**
**dass** der Einrücker (114) Einrück-Federmittel (136) zur Erzeugung der Einrückkraft aufweist, und dass der Ausrücker (16) einen Stellantrieb (130, 132) zur Erzeugung einer Ausrückkraft aufweist, welche die federelastische Einrückkraft überwinden kann.

4. Schaltbarer Zahnriemenantrieb nach mindestens einem der vorhergehenden Ansprüche,
**dadurch gekennzeichnet,**
**dass** zwei oder mehr Antriebsverbindungen (201,202,203) in einem Antriebsstrang zwischen einer Eingangswelle (206) und einer Ausgangswelle (208) vorgesehen sind, von welchen mindestens zwei von diesen Antriebsverbindungen (201,202) je mindestens einen der genannten Antriebssätze, je mit mindestens einer Ein- und Ausrückvorrichtung (14,16;114,116), aufweisen, und dass jeder der Antriebsverbindungen (201,202,203) eine andere Drehzahlübersetzung oder Drehzahluntersetzung aufweist, so dass Drehmomente alternativ über verschiedene Antriebssätze übertragbar sind, welche verschiedene Gangstufen bilden.

5. Schaltbarer Zahnriemenantrieb nach Anspruch 4,
**dadurch gekennzeichnet,**
**dass** die Antriebssätze ausgebildet sind, um für eine bestimmte Drehrichtung der Eingangswelle (206) eine bestimmte Drehrichtung der Ausgangswelle (208) zu erzeugen, welche für alle genannten Antriebssätze gleich ist.

6. Schaltbarer Zahnriemenantrieb nach mindestens einem der vorhergehenden Ansprüche,
**dadurch gekennzeichnet,**
**dass** der Antriebsstrang mit mindestens einer elektrischen Maschine (220) versehen ist, die mindestens als Motor, vorzugsweise auch als Generator betreibbar ist.

7. Schaltbarer Zahnriemenantrieb nach Anspruch 5 und 6,
**dadurch gekennzeichnet,**
**dass** die elektrische Maschine (220) ausgebildet ist, um den Antriebsstrang in einer Drehrichtung anzutreiben, die umgekehrt ist zu einer Drehrichtung, in welcher der Antriebsstrang von einem Verbrennungsmotor antreibbar ist.

8. Schaltbarer Zahnriemenantrieb nach mindestens einem der vorhergehenden Ansprüche,
**dadurch gekennzeichnet,**
**dass** er ein Fahrantriebsstrang oder einen Teil davon von einem Auto, Motorrad, Motorboot oder Motorschiff ist.

9. Schaltbarer Zahnriemenantrieb nach mindestens einem der Ansprüche 4 bis 8,
**dadurch gekennzeichnet,**
**dass** in dem Antriebsstrang mindestens eine schaltbare Kupplung (208,214) vorgesehen ist, an welcher die Drehmomentübertragung im Antriebsstrang für einen Gangwechselvorgang mindestens teilweise unterbrechbar ist.

10. Schaltbarer Zahnriemenantrieb nach Anspruch 9,
**dadurch gekennzeichnet,**
**dass** die Kupplung (208,214) eine mit Gleitreibung im Schlupfbetrieb betreibbare Lamellenkupplung ist und ein solcher Schlupfbetrieb während eines Gangwechselvorganges in Abhängigkeit von vorbestimmten Kriterien steuerbar ist.

## Claims

1. Switchable toothed belt drive, containing at least one drive unit which has at least two parallel-axis, spaced-apart gears (2, 4) and a toothed belt (6) which extends round these gears (2, 4) and whose teeth can engage in the teeth (2-2, 4-2) of the gears (2, 4), wherein an engaging and disengaging device (14, 16; 114, 116) is provided for bringing the toothed belt (6) into and out of engagement with least one of the two gears (2, 4) by radially lifting the toothed belt (6) off at least one of the two gears (2, 4) out of an engaged position into a disengaged position, and by radially placing the toothed belt (6) onto this gear (2, 4) in question out of the disengaged position into the engaged position, **characterised in that** the engaging and disengaging device (14, 16; 114, 116) has a split pulley with two discs (20, 22) which are arranged on both sides of the gear (2) in question and are freely rotatable relative to this gear (2), wherein the axes of rotation (10, 12) of the discs (20, 22) are aligned with the axis of rotation of the gear (2) in question, **in that** the two discs each have a circular belt running surface (24, 26), which slope down in a direction towards each other and obliquely to the axis of rotation (10) of the discs (20, 22) so as to form between them a keyway for receiving the toothed belt (6), **in that** the two discs (20, 22) are arranged so as to be axially displaceable relative to each other and relative to the gear (2), **in that** the engaging and disengaging device (14, 16; 114, 116) has a disengager (16; 116) by which on the two discs (20, 22) can be exerted a disengaging force forcing them axially towards each other, by which the two discs (20, 22) are axially slidable towards each other to such an extent, the toothed belt running up the belt running surfaces (24, 26) of the discs (20, 22), that they lift the toothed belt (6) radially off the gear (2) arranged between them and so bring it out of the engaged position into the disengaged position, **in that** the engaging and disengaging device (14, 16; 114, 116) has an engager (14; 114) by which on the toothed belt (6) on its outer side, transversely to the axes of rotation (10, 12) of the gears (2, 4), can be exerted an engaging force which stretches the belt (6) so much that it can force the two discs (20, 22) axially so far away from each other, the toothed belt running down the belt running surfaces (24, 26) of the discs (20, 22), that the toothed belt (6) sits radially on the gear (2) and so passes out of the disengaged position into the engaged position with the gear (2).

2. Switchable toothed belt drive according to claim 1, **characterised in that** the disengager (16) has disengaging spring means (30, 31, 32, 33) for producing the disengaging force, which elastically axially bias the two discs (20, 22) in a direction towards each other, **in that** the engager (14) has an actuating drive (36) for producing an engaging force which can overcome the elastic disengaging force.

3. Switchable toothed belt drive according to claim 1, **characterised in that** the engager (114) has engaging spring means (136) for producing the engaging force and **in that** the disengager (16) has an actuating drive (130, 132) for producing a disengaging force which can overcome the elastic engaging force.

4. Switchable toothed belt drive according to one or more of the preceding claims, **characterised in that** two or more drive links (201, 202, 203) are provided in a drive train between an input shaft (206) and an output shaft (208), of which at least two of these drive links (201, 202) each have at least one of the aforementioned drive units, each with at least one engaging and disengaging device (14, 16; 114, 116), and **in that** each of the drive links (201, 202, 203) has a different speed step-up or step-down ratio, so that torques can be transmitted alternately via different drive units which form different gears.

5. Switchable toothed belt drive according to claim 4, **characterised in that** the drive units are designed to produce, for a given direction of rotation of the input shaft (206), a given direction of rotation of the output shaft (208) which is the same for all the aforementioned drive units.

6. Switchable toothed belt drive according to one or more of the preceding claims, **characterised in that** the drive train is provided with at least one electric machine (220) which can be operated at least as a motor, preferably also as a generator.

7. Switchable toothed belt drive according to claims 5 and 6, **characterised in that** the electric machine (220) is designed to drive the drive train in one direction of rotation which is the reverse of a direction of rotation in which the drive train can be driven by an internal combustion engine.

8. Switchable toothed belt drive according to one or more of the preceding claims, **characterised in that** it is a transmission drive train or part thereof of a car, motor cycle, motor boat or motor vessel.

9. Switchable toothed belt drive according to one or more of claims 4 to 8, **characterised in that** in the drive train is provided at least one clutch (208, 214) at which the torque transmission in the drive train can be at least partially interrupted for a gear-changing operation.

10. Switchable toothed belt drive according to claim 9, **characterised in that** the clutch (208, 214) is a multi-plate clutch which can be operated with sliding friction in slipping mode, and such slipping mode can be controlled during a gear-changing operation as a function of predetermined criteria.

## Revendications

1. Entraînement à courroie commutable, contenant au moins un jeu d'entraînement qui présente au moins deux roues dentées (2, 4) d'axes parallèles et espacées l'une de l'autre et une courroie dentée (6) s'étendant tout autour de ces roues dentées (2, 4), dont les dents peuvent venir en engagement dans les dents (2-2, 4-2) des roues dentées (2, 4),
un dispositif d'embrayage et de débrayage (14, 16 ; 114, 116) étant prévu pour amener en engagement et hors d'engagement la courroie dentée (6) avec au moins l'une des deux roues dentées (2, 4) par soulèvement radial de la courroie dentée (6) d'au moins l'une des deux roues dentées (2, 4) d'une position d'engagement dans une position hors d'engagement, et par positionnement radial de la courroie dentée (6) sur cette roue dentée en question (2, 4) de la position hors d'engagement dans la position d'engagement,
**caractérisé en ce que** le dispositif d'embrayage et de débrayage (14, 16 ; 114, 116) présente une poulie à courroie partagée avec deux disques (20, 22) qui sont disposés de part et d'autre de la roue dentée en question (2) et qui peuvent tourner librement par rapport à cette roue dentée, les axes de rotation (10, 12) des disques (20, 22) étant alignés avec l'axe de rotation de la roue dentée en question (2), **en ce que** les deux disques ont chacun une surface de roulement (24, 26) de courroie de forme circulaire ces surfaces étant inclinées l'une vers l'autre et obliquement par rapport à l'axe de rotation (10) des disques (20, 22), de sorte qu'elles forment entre elles une rainure de clavetage pour recevoir la courroie dentée (6), **en ce que** les deux disques (20, 22) sont disposés de manière déplaçable axialement l'un par rapport à l'autre et par rapport à la roue dentée (2), **en ce que** le dispositif d'embrayage et de débrayage (14, 16 ; 114, 116) présente un dispositif de débrayage (16 ; 116) qui exerce sur les deux disques (20, 22) une force de débrayage les poussant axialement l'un vers l'autre, grâce à laquelle les deux disques (20, 22) peuvent être poussés axialement l'un vers l'autre dans une mesure telle, avec la courroie dentée montant sur les surfaces de roulement (24, 26) de courroie des disques (20, 22), qu'ils soulèvent radialement la courroie dentée (6) de la roue dentée (2) disposée entre eux et l'amène donc de la position d'engagement dans la position hors d'engagement, **en ce que** le dispositif d'embrayage et de débrayage (14, 16 ; 114, 116) présente un dispositif d'embrayage (14 ; 114) qui exerce sur la courroie dentée (6) une force d'embrayage sur son côté extérieur, transversalement aux axes de rotation (10, 12) des roues dentées (2, 4), qui tend la courroie dentée (6) si fortement qu'elle peut écarter axialement l'un de l'autre les deux disques (20, 22) dans une mesure telle, avec la courroie dentée descendant sur les surfaces de roulement (24, 26) de courroie des disques (20, 22), que la courroie (6) repose radialement sur la roue dentée (2) et arrive ainsi de la position hors d'engagement dans la position d'engagement avec la roue dentée (2).

2. Entraînement à courroie commutable selon la revendication 1,
**caractérisé en ce que**
le dispositif de débrayage (16) présente des moyens à ressort de débrayage (30, 31, 32, 33) pour produire la force de débrayage, lesquels précontraignent les deux disques (20, 22) de manière élastique à ressort axialement l'un vers l'autre, **en ce que** le dispositif d'embrayage (14) présente un entraînement de commande (36) pour produire une force d'embrayage qui peut surmonter la force de débrayage élastique à ressort.

3. Entraînement à courroie commutable selon la revendication 1,
**caractérisé en ce que**
le dispositif d'embrayage (114) présente des moyens à ressort d'embrayage (136) pour produire la force d'embrayage, et **en ce que** le dispositif de débrayage (16) présente un entraînement de commande (130, 132) pour produire une force de débrayage qui peut surmonter la force d'embrayage élastique à ressort.

4. Entraînement à courroie commutable selon au moins l'une quelconque des revendications précédentes,
**caractérisé en ce que**
deux ou plusieurs liaisons d'entraînement (201, 202, 203) sont prévues dans une transmission entre un arbre d'entrée (206) et un arbre de sortie (208), dont au moins deux de ces liaisons d'entraînement (201, 202) présentent chacune au moins l'un desdits jeux d'entraînement, à chaque fois avec au moins un dispositif d'embrayage et de débrayage (14, 16 ; 114, 116), et **en ce que** chacune des liaisons d'entraînement (201, 202, 203) présente une multiplication ou démultiplication de vitesse, de sorte que des couples puissent être transférés de manière alternée sur plusieurs jeux d'entraînement qui constituent les différents rapports de vitesse.

5. Entraînement à courroie commutable selon la revendication 4,
**caractérisé en ce que**
les jeux d'entraînement sont réalisés pour produire un sens de rotation déterminé de l'arbre de sortie (208) pour un sens de rotation déterminé de l'arbre d'entrée (206), lequel est identique pour tous les jeux d'entraînement cités.

6. Entraînement à courroie commutable selon au moins l'une quelconque des revendications précédentes,
**caractérisé en ce que**
la transmission est pourvue d'au moins une machine électrique (220) qui peut être utilisée au moins en tant que moteur, et de préférence aussi en tant que générateur.

7. Entraînement à courroie commutable selon la revendication 5 et 6,
**caractérisé en ce que**
la machine électrique (220) est réalisée pour entraîner la transmission dans un sens de rotation qui est inverse d'un sens de rotation dans lequel la transmission peut être entraînée par un moteur à combustion interne.

8. Entraînement à courroie commutable selon au moins l'une quelconque des revendications précédentes,
**caractérisé en ce qu'**
il s'agit d'une transmission de conduite ou d'une partie de celle-ci pour une automobile, une motocyclette, un canot à moteur ou un bateau à moteur.

9. Entraînement à courroie commutable selon au moins l'une quelconque des revendications 4 à 8,
**caractérisé en ce qu'**
au moins un embrayage commutable (208, 214) est prévu dans la transmission, au niveau duquel le transfert de couple dans la transmission peut être au moins partiellement interrompu pour une opération de changement de vitesses.

10. Entraînement à courroie commutable selon la revendication 9,
**caractérisé en ce que**
l'embrayage (208, 214) est un embrayage à lamelles fonctionnant avec un frottement de glissement en mode de glissement et un tel mode de glissement peut être commandé en fonction de critères prédéterminés pendant une opération de changement de vitesses.
